# EUROPÄISCHE PATENTSCHRIFT

(11) **EP 0 840 947 B1**
(45) Veröffentlichungstag und Bekanntmachung des Hinweises auf die Patenterteilung: **07.01.1999**
(21) Anmeldenummer: 96923845.0
(22) Anmeldetag: 15.07.1996
(51) Int. Cl.: H01M 8/02, H01M 8/12, H01M 8/24

(54) **HOCHTEMPERATUR-BRENNSTOFFZELLE UND HOCHTEMPERATUR-BRENNSTOFFZELLENSTAPEL MIT VERBUNDLEITERPLATTEN, DIE EINE KONTAKTSCHICHT AUS CHROMSPINELL TRAGEN**
HIGH-TEMPERATURE FUEL CELL AND HIGH-TEMPERATURE FUEL CELL STACK WITH INTERCONNECTING CONDUCTING PLATES PROVIDED WITH A CHROMIUM SPINEL CONTACT LAYER
PILE A COMBUSTIBLE POUR HAUTES TEMPERATURES ET EMPILEMENT DE PILES POUR HAUTES TEMPERATURES POURVU DE PLAQUETTES CONDUCTRICES D'INTERCONNEXION PORTANT UNE COUCHE DE CONTACT EN SPINELLE AU CHROME

(30) Priorität: 21.07.1995 DE 19526722
(43) Veröffentlichungstag der Anmeldung: 13.05.1998
(73) Patentinhaber: SIEMENS AKTIENGESELLSCHAFT, 80333 München (DE)
(72) Erfinder: HOFER, Gerhard, D-91341 Röttenbach (DE); BRÜCKNER, Belinda, D-90518 Altdorf (DE); KLEINLEIN, Wilhelm, D-90762 Fürth (DE); SCHMIDT, Harald, D-81739 München (DE)
(86) Internationale Anmeldenummer: DE9601282
(87) Internationale Veröffentlichungsnummer: WO9704494

(56) Entgegenhaltungen:
- EP-A- 0 338 823
- EP-A- 0 556 532
- WO-A-94/25994
- DE-A- 3 922 673
- US-A- 5 034 288
- PATENT ABSTRACTS OF JAPAN vol. 017, no. 150 (E-1339), 25.März 1993 & JP,A,04 315772 (OSAKA GAS CO LTD), 6.November 1992,
- PATENT ABSTRACTS OF JAPAN vol. 95, no. 009 & JP,A,07 240216 (MITSUBISHI HEAVY IND LTD), 12.September 1995,

## Beschreibung

Die Erfindung bezieht sich auf eine Hochtemperatur-Brennstoffzelle, einen Hochtemperatur-Brennstoffzellenstapel und ein Verfahren zum Herstellen einer Hochtemperatur-Brennstoffzelle.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom: Mit hohem Wirkungsgrad und - wenn als Brenngas reiner Wasserstoff eingesetzt wird - ohne Emission von Schadstoffen und Kohlenmonoxid. Auch mit technischen Brenngasen, beispielsweise Erdgas, und mit Luft anstelle von reinem Sauerstoff erzeugt die Brennstoffzelle auf Grund des hohen Wirkungsgrades deutlich weniger Schadstoffe und weniger CO₂ pro Energieeinheit als andere Energieerzeuger, die mit fossilen Energieträgern arbeiten. Die technische Umsetzung des Prinzips der Brennstoffzelle hat zu sehr unterschiedlichen Lösungen, und zwar mit verschiedenartigen Elektrolyten und mit Betriebstemperaturen zwischen 80 °C und 1000 °C, geführt.

Bei der Festelektrolyt-Hochtemperatur-Brennstoffzelle (Solid Oxid Fuel Cell, SOFC) dient Erdgas als primäre Energiequelle. Der sehr kompakte Aufbau ermöglicht eine Leistungsdichte von 1 MW/m³. Es ergeben sich Betriebstemperaturen von über 900 °C.

Bei einem Hochtemperatur-Brennstoffzellenstapel aus Festelektrolyt-Hochtemperatur-Brennstoffzellen, in der Fachliteratur wird ein Brennstoffzellenstapel auch "Stack" genannt, liegen unter einer oberen Verbundleiterplatte, welche den Hochtemperatur-Brennstoffzellenstapel abdeckt, der Reihenfolge nach eine Kontaktschicht, ein Festelektrolyt-Elektroden-Element, eine weitere Kontaktschicht, eine weitere Verbundleiterplatte usw. aufeinander. Das Elektrolyt-Elektroden-Element umfaßt dabei zwei Elektroden und einen zwischen den beiden Elektroden angeordneten Festelektrolyten. Die Verbundleiterplatten innerhalb des Hochtemperatur-Brennstoffzellenstapels sind dabei als bipolare Platten ausgeführt. Diese sind im Gegensatz zu einer am Rande des Hochtemperatur-Brennstoffzellenstapels angeordneten Verbundleiterplatte auf beiden Seiten mit Kanälen für die Versorgung des Festelektrolyt-Elektroden-Elements mit einem Betriebsmittel versehen.

Dabei bilden jeweils ein zwischen zwei benachbarten Verbundleiterplatten liegendes Festelektrolyt-Elektroden-Element, einschließlich der beidseitig am Festelektrolyt-ElektrodenElement unmittelbar anliegenden Kontaktschicht und der an der Kontaktschicht anliegenden Seiten jeder der beiden Verbundleiterplatten, zusammen eine Hochtemperatur-Brennstoffzelle.

Dieser und weitere Typen von Brennstoffzellen sind beispielsweise aus dem "Fuel Cell Handbook" von A. J. Appelby und F. R. Foulkes, 1989, Seiten 440 bis 454, bekannt.

Die Erfahrung hat gezeigt, daß ein wesentliches Problem beim Betrieb einer Hochtemperatur-Brennstoffzelle darin besteht, einen langzeitstabilen elektrischen Kontakt zwischen der metallischen Verbundleiterplatte und den Elektroden der Brennstoffzelle zu erzielen. Zu diesem Zweck werden sogenannte Kontaktschichten eingesetzt. Bisher wurden hierzu keramische Pulver aus dem Perowskit-System (La,Sr)(Co,Mn)O₃ in Form einer Paste mittels Siebdrucktechnik oder in Form einer Spritzsuspension mittels Naßpulverspritzen auf die metallische Verbundleiterplatte aufgetragen. Untersuchungen zu diesem Stoffsystem haben gezeigt, daß es bei Verwendung von Sr-dotiertem Material an der Grenzfläche zwischen Kontaktschicht und Verbundleiterplatte zu der Bildung einer schlecht leitfähigen SrCrO₄-Schicht kommt. Da die Verbundleiterplatte auch als Stromabgriff dienen muß, ist diese schlecht leitfähige Kontaktschicht nicht zu akzeptieren.

Ein weiteres Problem neben dem der elektrischen Leitfähigkeit ist die thermodynamische Stabilität bei der Betriebstemperatur des Hochtemperatur-Brennstoffzellenstapels. Betriebstemperaturen von über 900 °C stellen hohe Anforderungen an die thermodynamische Stabilität. Desweiteren müssen unerwünschte Phasenbildungen vermieden werden, die sich aufgrund der chemischen Reaktion von Elementen ausbilden, die in der Kontaktschicht und nicht in der Verbundleiterplatte oder der Elektrode vorhanden sind.

Ein zusätzliches Problem ist das Verdampfen von Chrom aus der chromhaltigen Verbundleiterplatte, das zu einer Degradation der Brennstoffzelle führt.

Der Erfindung liegt nun die Aufgabe zugrunde, eine Hochtemperatur-Brennstoffzelle anzugeben, welche eine Kontaktschicht mit ausreichender elektrischer Leitfähigkeit und thermodynamischer Stabilität hat, wobei keine Wechselwirkungen vorliegen, die zu einer unerwünschten Phasenbildung führen. Desweiteren soll ein Hochtemperatur-Brennstoffzellenstapel angegeben werden, der sich aus einer Anzahl dieser Hochtemperatur-Brennstoffzellen zusammensetzt. Außerdem liegt der Erfindung die Aufgabe zugrunde, ein Verfahren zum Herstellen einer solchen Hochtemperatur-Brennstoffzelle anzugeben.

Die erstgenannte Aufgabe wird gemäß der Erfindung gelost durch Hochtemperatur-Brennstoffzelle mit wenigstens einer Verbundleiterplatte, die wenigstens einer Elektrode zugeordnet ist, wobei zwischen der Verbundleiterplatte und der Elektrode eine Kontaktschicht angeordnet ist, die aus einem oxidischen Mischkristall-Pulver mit Spinellstruktur hervorgegangen ist, das neben Chrom noch ein zweiwertiges Element, ausgewählt aus der Gruppe Ti, V, Mn ,Fe, Co und Cu, enthält.

Die zweitgenannte Aufgabe wird gemäß der Erfindung gelöst durch einen Hochtemperatur-Brennstoffzellenstapel, der sich aus einer Anzahl dieser Hochtemperatur-Brennstoffzellen zusammensetzt.

Die drittgenannte Aufgabe wird gemäß der Erfindung gelost durch ein Verfahren zum Herstellen einer Hochtemperatur-Brennstoffzelle mit wenigstens einer Verbundleiterplatte, die wenigstens einer Elektrode zugeordnet ist, wobei zwischen die Verbundleiterplatte und die Elektrode eine Kontaktschicht eingebracht wird, die aus einem oxidischen Mischkristall-Pulver mit Spinellstruktur hervorgegangen ist, in dem neben Chrom noch ein zweiwertiges Element enthalten ist, das aus der Gruppe Ti, V, Mn ,Fe, Co und Cu ausgewählt ist.

Diese Kontaktschicht zeigt im Gegensatz zu den bekannten Kontaktschichten aus Perowskit eine ausreichende elektrische Leitfähigkeit. Sie ist außerdem bei einer Einsatztemperatur von über 900 °C thermodynamisch stabiler als Kontaktschichten mit einer Perowskitstruktur. Im allgemeinen ist eine Vielzahl von Spinellen geeignet, die eine ausreichende elektrische Leitfähigkeit besitzen.

Besonders sind hierfür die FeCr₂O₄ Spinelle aufgrund ihrer elektrischen Leitfähigkeit von besonderem Interesse. Beim Einsatz von z.B. CoCr₂O₄ und FeCr₂O₄ Mischkristallen als Kontaktschicht sind keine anderen Elemente in der Kontaktschicht vorhanden, als sich bereits in der metallischen Verbundleiterplatte und den Elektroden befinden. Dadurch sind nahezu keine unerwünschten Phasenbildungen zu erwarten.

Vorzugsweise wird die Kontaktschicht als keramisches Pulver eingebracht.

Insbesondere wird die Kontaktschicht unmittelbar auf der Verbundleiterplatte angeordnet. Hierdurch wird das Verdampfen von Chrom aus der chromhaltigen Verbundleiterplatte weitgehend verhindert.

Weitere Ausgestaltungen der Erfindung sind in den Unteransprüchen beschrieben.

Zur weiteren Erläuterung der Erfindung wird auf die Ausführungsbeispiele der Zeichnung verwiesen. Es zeigen:
- FIG 1: einen Querschnitt durch eine Hochtemperatur-Brennstoffzelle in schematischer Darstellung.
- FIG 2: eine Ansicht eines Hochtemperatur-Brennstoffzellenstapels in perspektivischer Darstellung.

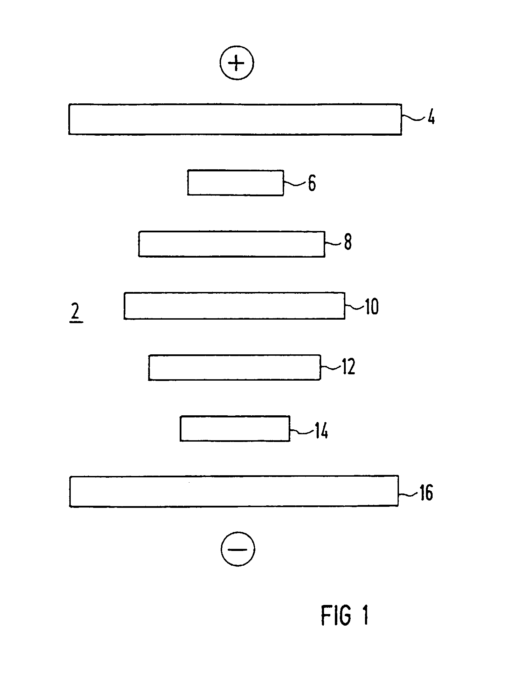

Gemäß Figur 1 umfaßt eine Hochtemperatur-Brennstoffzelle 2 eine Verbundleiterplatte 4, eine Kontaktschicht 6, eine als Kathode ausgebildete Elektrode 8, einen Elektrolyten 10, eine als Anode ausgebildete Elektrode 12, eine Kontaktschicht 14 und eine Verbundleiterplatte 16, die in der angegebenen Reihenfolge aufeinandergestapelt sind. Die Verbundleiterplatten 4 und 16 bestehen aus einer metallischen chromhaltigen Verbindung.

Die Kontaktschichten 6 und 14, die zwischen die Verbundleiterplatten 4 bzw. 16 und den Elektroden 8 bzw. 12 eingebracht sind, sind aus einem oxidische Mischkristall-Pulver mit Spinellstruktur entstanden, das neben Chrom noch ein zweiwertiges Element, ausgewählt aus der Gruppe Ti, V, Mn, Fe, Co und Cu, enthält.

Die Kontaktschichten 6, 14 können als keramisches Pulver z. B. in Form einer Paste auf die Verbundleiterplatten 4, 16 mittels Siebdrucktechnik oder als Suspension mittels Naßpulverspritzen aufgetragen sein. Da die Kontaktschichten 6 und 14 unmittelbar auf den Verbundleiterplatten 4 bzw. 16 aufgetragen sind, kann die Verdampfung des Chroms von den metallischen chromhaltigen Verbundleiterplatten 4 bzw. 16 weitgehend verhindert werden. Eine Verdampfung des Chroms würde zu einer Degradation der Hochtemperatur-Brennstoffzellenanlage führen.

Als bevorzugtes Beschichtungsverfahren kann z. B. ein Vakuumplasmaspritzen, ein CVD-Verfahren, eine Hydrothermalsynthese oder ein Sol-Gel-Verfahren angewendet werden.

Die Verwendung von FeCr₂O₄- oder CoCr₂O₄-Mischkristallen hat den besonderen Vorteil, daß in der Kontaktschicht 6, 14 keine anderen Elemente vorhanden sind, die nicht auch schon in den metallischen chromhaltigen Verbundleiterplatten 4, 16 enthalten sind. Dadurch ist keine oder nahezu keine Wechselwirkung zu erwarten, die andernfalls zu einer unerwünschten Phasenbildung führt.

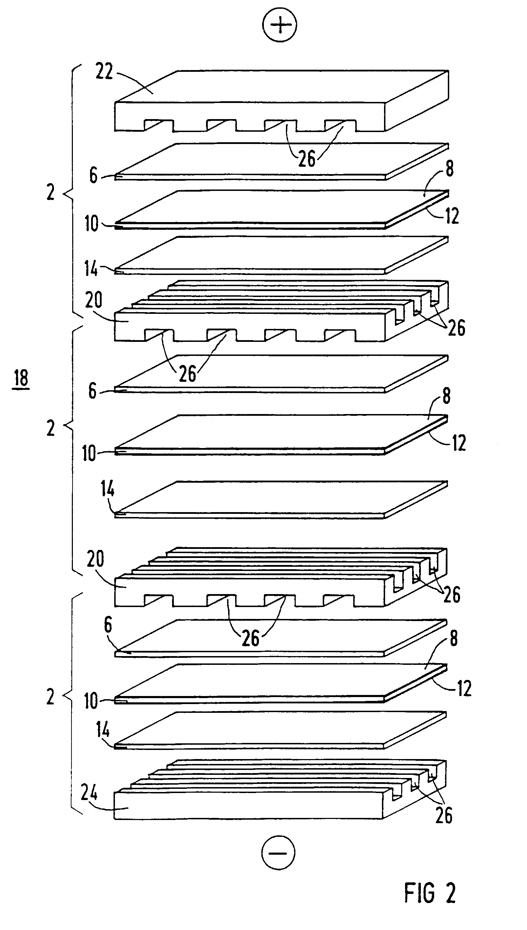

Figur 2 zeigt in perspektivischer Darstellung den schematischen Aufbau eines Hochtemperatur-Brennstoffzellenstapels 18, der hier aus drei Hochtemperatur-Brennstoffzellen 2 besteht, die den gleichen Aufbau wie die in Figur 1 dargestellte Hochtemperatur-Brennstoffzelle 2 haben.

Der Hochtemperatur-Brennstoffzellenstapel 18 ist nach oben mit einer Verbundleiterplatte 22 und nach unten mit einer Verbundleiterplatte 24 abgeschlossen. Verbundleiterplatten, die innerhalb des Hochtemperatur-Brennstoffzellenstapels 18 angeordnet sind, d.h. die nicht den Hochtemperatur-Brennstoffzellenstapel 18 abschließen, wie die Verbundleiterplatten 22 und 24, sind als bipolare Platten 20 ausgeführt.

Der obere Teil der bipolaren Platte 20 ist der Anode 12 und der untere Teil der bipolaren Platte 20 der Kathode 8 zugeordnet. In diesem Fall gehören Kathode 8 und Anode 12 jeweils zu benachbarten Hochtemperatur-Brennstoffzellen 2.

Die bipolaren Platten 20 und die Verbundleiterplatten 22, 24 sind jeweils mit Kanälen 26 versehen, die für die Versorgung der Hochtemperatur-Brennstoffzellen 2 mit Prozeßgasen vorgesehen sind. Bei den Verbundleiterplatten 22, 24 ist jeweils nur eine Seite mit den Kanälen 26 versehen, während die bipolaren Platten 20 auf beiden Seiten mit rechtwinklig zueinander ausgerichteten Kanälen 26 versehen sind.

## Patentansprüche

1. Hochtemperatur-Brennstoffzelle (2) mit wenigstens einer Verbundleiterplatte (4, 16; 20, 22, 24), die wenigstens einer Elektrode (8, 12) zugeordnet ist, wobei zwischen der Verbundleiterplatte (4, 16; 20, 22, 24) und der Elektrode (8, 12) eine Kontaktschicht (6, 14) angeordnet ist, die aus einem oxidischen Mischkristall-Pulver mit Spinellstruktur hervorgegangen ist, das neben Chrom noch ein zweiwertiges Element, ausgewählt aus der Gruppe Ti, V, Mn ,Fe, Co und Cu, enthält.

2. Hochtemperatur-Brennstoffzelle (2) nach Anspruch 1, bei der die Kontaktschicht (6, 14) durch Vakuumplasmaspritzen hergestellt ist.

3. Hochtemperatur-Brennstoffzelle (2) nach Anspruch 1, bei der die Kontaktschicht (6, 14) durch ein CVD-Verfahren hergestellt ist.

4. Hochtemperatur-Brennstoffzelle (2) nach Anspruch 1, bei der die Kontaktschicht (6, 14) durch Hydrothermalsynthese hergestellt ist.

5. Hochtemperatur-Brennstoffzelle (2) nach Anspruch 1, bei der die Kontaktschicht (6, 14) durch ein Sol-Gel-Verfahren hergestellt ist.

6. Hochtemperatur-Brennstoffzelle (2) nach einem der vorhergehenden Ansprüche, bei der die Verbundleiterplatte (4, 16; 20, 22, 24) als bipolare Platte ausgeführt ist.

7. Hochtemperatur-Brennstoffzellenstapel (18), der sich aus einer Anzahl von Hochtemperatur-Brennstoffzellen (2) nach einem der vorhergehenden Ansprüche zusammensetzt.

8. Verfahren zum Herstellen einer Hochtemperatur-Brennstoffzelle (2) mit wenigstens einer Verbundleiterplatte (4, 16; 20, 22, 24), die wenigstens einer Elektrode (8, 12) zugeordnet ist, wobei zwischen die Verbundleiterplatte (4, 16; 20, 22, 24) und die Elektrode (8, 12) eine Kontaktschicht (6, 14) eingebracht wird, die aus einem oxidischen Mischkristall-Pulver mit Spinellstruktur hervorgegangen ist, in dem neben Chrom noch ein zweiwertiges Element enthalten ist, das aus der Gruppe Ti, V, Mn ,Fe, Co und Cu ausgewählt ist.

9. Verfahren nach Anspruch 8, bei der die Kontaktschicht (6, 14) als keramisches Pulver eingebracht wird.

10. Verfahren nach Anspruch 9, bei der das keramische Pulver durch eine Siebdrucktechnik eingebracht wird.

11. Verfahren nach Anspruch 9, bei der das keramische Pulver durch ein Naßpulverspritzen eingebracht wird.

12. Verfahren nach einem der Ansprüche 8 bis 11, bei der die Kontaktschicht (6, 14) unmittelbar auf der Verbundleiterplatte (4, 16; 20, 22, 24) angeordnet wird.

13. Verfahren nach Anspruch 12, bei der die Kontaktschicht (6, 14) durch Vakuumplasmaspritzen auf der Verbundleiterplatte (4, 16; 20, 22, 24) angeordnet wird.

14. Verfahren nach Anspruch 12, bei der die Kontaktschicht (6, 14) mittels eines CVD-Verfahrens auf der Verbundleiterplatte (4, 16; 20, 22, 24) angeordnet wird.

15. Verfahren nach Anspruch 12, bei der die Kontaktschicht (6, 14) durch Hydrothermalsynthese auf der Verbundleiterplatte (4, 16; 20, 22, 24) angeordnet wird.

16. Verfahren nach Anspruch 12, bei der die Kontaktschicht (6, 14) durch ein Sol-Gel-Verfahren auf der Verbundleiterplatte (4, 16; 20, 22, 24) angeordnet wird.

## Claims

1. High-temperature fuel cell (2) having at least one interconnecting conducting plate (4, 16; 20, 22, 24) to which at least one electrode (8, 12) is assigned, a contact layer (6, 14) produced from an oxide mixed crystal powder which has a spinel structure and, in addition to chromium, also contains a divalent element selected from the group Ti, V, Mn, Fe, Co and Cu, being arranged between the interconnecting conducting plate (4, 16; 20, 22, 24) and the electrode (8, 12).

2. High-temperature fuel cell (2) according to Claim 1, in which the contact layer (6, 14) is produced by vacuum plasma spraying.

3. High-temperature fuel cell (2) according to Claim 1, in which the contact layer (6, 14) is produced by a CVD process.

4. High-temperature fuel cell (2) according to Claim 1, in which the contact layer (6, 14) is produced by hydrothermal synthesis.

5. High-temperature fuel cell (2) according to Claim 1, in which the contact layer (6, 14) is produced by a sol-gel process.

6. High-temperature fuel cell (2) according to one of the preceding claims, in which the interconnecting conducting plate (4, 16; 20, 22, 24) is designed as a bipolar plate.

7. High-temperature fuel cell stack (18) which is composed of a number of high-temperature fuel cells (2) according to one of the preceding claims.

8. Process for the production of a high-temperature fuel cell (2) having at least one interconnecting conducting plate (4, 16; 20, 22, 24) to which at least one electrode (8, 12) is assigned, a contact layer (6, 14) produced from an oxide mixed crystal powder which has a spinel structure and in which, in addition to chromium, a divalent element selected from the group Ti, V, Mn, Fe, Co and Cu is also contained, being introduced between the interconnecting conducting plate (4, 16; 20, 22, 24) and the electrode (8, 12).

9. Process according to Claim 8, in which the contact layer (6, 14) is introduced as a ceramic powder.

10. Process according to Claim 9, in which the ceramic powder is introduced by a screen printing technique.

11. Process according to Claim 9, in which the ceramic powder is introduced by wet powder spraying.

12. Process according to one of Claims 8 to 11, in which the contact layer (6, 14) is arranged directly on the interconnecting conducting plate (4, 16; 20, 22, 24).

13. Process according to Claim 12, in which the contact layer (6, 14) is arranged by vacuum plasma spraying on the interconnecting conducting plate (4, 16; 20, 22, 24).

14. Process according to Claim 12, in which the contact layer (6, 14) is arranged by means of a CVD process on the interconnecting conducting plate (4, 16; 20, 22, 24).

15. Process according to Claim 12, in which the contact layer (6, 14) is arranged by hydrothermal synthesis on the interconnecting conducting plate (4, 16; 20, 22, 24).

16. Process according to Claim 12, in which the contact layer (6, 14) is arranged by a sol-gel process on the interconnecting conducting plate (4, 16; 20, 22, 24).

## Revendications

1. Pile (2) à combustible pour haute température, comportant au moins une plaque (4, 16 ; 20, 22,24) conductrice composite, qui est associée à au moins une électrode (8, 12), une couche (6, 14) de contact étant interposée entre la plaque (4,16 ; 20, 22, 24) conductrice composite et l'électrode (8, 12), et provenant d'une poudre de cristaux mixtes oxydée à structure de spinelle, qui renferme, outre du chrome, un élément divalent choisi dans le groupe Ti, V, Mn, Fe, Co et Cu.

2. Pile (2) à combustible pour haute température suivant la revendication 1, dans laquelle la couche (6, 14) de contact est fabriquée par projection au plasma sous vide.

3. Pile (2) à combustible pour haute température suivant la revendication 1, dans laquelle la couche (6, 14) de contact est fabriquée par un procédé de dépôt chimique en phase vapeur.

4. Pile (2) à combustible pour haute température suivant la revendication 1, dans laquelle la couche (6, 14) de contact est fabriquée par synthèse hydrothermique.

5. Pile (2) à combustible pour haute température suivant la revendication 2, dans laquelle la couche (6, 14) de contact est fabriquée par un procédé sol-gel.

6. Pile (2) à combustible pour haute température suivant l'une des revendications précédentes, dans laquelle la plaque (4, 16 ; 20, 22, 24) conductrice composite est réalisée en plaque bipolaire.

7. Empilement (18) de piles à combustible pour haute température. qui se compose d'un certain nombre de piles (2) à combustible pour haute température suivant l'une des revendications précédentes.

8. Procédé de fabrication d'une pile (2) à combustible pour haute température, comprenant au moins une plaque (4, 16 ; 20, 22, 24) conductrice composite, qui est associée à au moins une électrode (8, 12), une couche (6, 14) de contact étant interposée entre la plaque (4, 16 ; 20, 22, 24) conductrice composite et l'électrode (8, 12), et provenant d'une poudre de cristaux mixtes oxydée à structure de spinelle qui renferme, outre du chrome. un élément divalent choisi dans le groupe Ti, V, Mn, Fe, Co et Cu.

9. Procédé suivant la revendication 8 dans lequel la couche (6, 14) de contact est déposée en tant que poudre de céramique.

10. Procédé suivant la revendication 9, dans lequel la poudre de céramique est déposée par sérigraphie.

11. Procédé suivant la revendication 9, dans lequel la poudre en céramique est déposée par projection de poudre en voie humide.

12. Procédé suivant la revendication 8 à 11, dans lequel la poudre (6, 14) de contact est disposée directement sur la plaque (4, 16 ; 20, 22, 24) conductrice composite.

13. Procédé suivant la revendication 12, dans lequel la couche (6, 14) de contact est déposée par projection au plasma sous vide sur la plaque (4, 16 ; 20, 22, 24) conductrice composite.

14. Procédé suivant la revendication 12, dans lequel la couche (6, 14) de contact est disposée au moyen d'un procédé de dépôt chimique en phase vapeur sur la plaque (4, 16 ; 20, 22, 24) conductrice composite.

15. Procédé suivant la revendication 12, dans lequel la couche (6, 14) de contact est disposée sur la plaque (4,16 ; 20, 22, 24) conductrice composite par synthèse hydrothermique.

16. Procédé suivant la revendication 12, dans lequel la couche (6, 14) de contact est disposée sur la plaque (4, 16 ; 20, 22, 24) conductrice composite par un procédé sol-gel.
